# EUROPÄISCHE PATENTSCHRIFT

(11) **EP 1 950 484 B1**
(45) Veröffentlichungstag und Bekanntmachung des Hinweises auf die Patenterteilung: **04.08.2010**
(21) Anmeldenummer: 07120333.5
(22) Anmeldetag: 09.11.2007
(51) Int. Cl.: F16L 37/56, F16L 39/00, F16L 29/04, F16L 37/34

(54) **Hydraulik-Mehrfachkupplung**
Hydraulic multiple coupling
Connecteur hydraulique multiple

(30) Priorität: 27.01.2007 DE 202007001232 U
(43) Veröffentlichungstag der Anmeldung: 30.07.2008
(73) Patentinhaber: Voswinkel KG, 58540 Meinerzhagen (DE)
(72) Erfinder: Hartmann, Jürgen, 58339 Breckerfeld (DE)
(74) Vertreter: Patentanwälte Dr. Solf & Zapf

(56) Entgegenhaltungen:
- EP-A1- 0 522 493
- EP-A1- 0 862 011
- EP-A2- 1 127 655
- WO-A-00/31453
- DE-A1- 10 344 253
- DE-C1- 19 951 885
- FR-A- 2 181 261

## Beschreibung

Die vorliegende Erfindung betrifft eine Mehrfachkupplung mit mindestens zwei Hydraulik-Steckkupplungen gemäß dem Oberbegriff des Anspruchs 1.

Derartige Mehrfachkupplungen dienen zum schnellen Verbinden und Trennen von jeweils mehreren (mindestens zwei) Hydraulikleitungen, und zwar insbesondere für den lösbaren Anschluss von hydraulischen Anbaugeräten, wie Frontlader oder dergleichen, an Arbeitsfahrzeugen, wie Traktoren, Baufahrzeugen und dergleichen. An dem jeweiligen Fahrzeug - und somit auf der Seite einer Hydraulikpumpe (Druck-Geberseite) - wird eine erste Kupplungshälfte befestigt (Festteil), und das jeweilige Anbaugerät weist verbraucherseitig (Druck-Nehmerseite) eine zweite Kupplungshälfte (Losteil) auf. In aller Regel weist die geberseitige erste Kupplungshälfte als Muffenventile ausgebildete und in einem plattenförmigen Kupplungsträger gehalterte Kupplungsteile auf, während die zweite, nehmerseitige Kupplungshälfte als korrespondierende Steckerventile ausgebildete und ebenfalls in einem plattenförmigen Kupplungsträger gehalterte Kupplungsteile aufweist. Die Kupplungsträger sind zum paarweisen Steckkuppeln der Kupplungsteile mit ihren einander zugewandten Kupplungsflächen mittels einer mechanischen Betätigungseinrichtung gegeneinander bewegbar und in einer Kupplungslage arretierbar. Jedes Steckerventil weist einen über die Kupplungsfläche des zugehörigen Kupplungsträgers vorstehenden Steckschaft zum Einstecken in das im Wesentlichen stirnseitig in der Kupplungsfläche des zugehörigen Kupplungsträgers liegende Muffenventil auf. Weiterhin weisen einerseits jedes Muffenventil einen beim Kuppeln verschiebbaren Ventilsitz und einen starren Ventilkörper sowie andererseits jedes Steckerventil einen starren Ventilsitz und einen verschiebbaren Ventilkörper auf. Jedem Ventilkörper ist eire vordere, stirnseitige Kreisfläche zugeordnet und jedem Ventilsitz eine vordere, stirnseitige, die jeweils zugehörige Kreisfläche konzentrisch umschließende Ringfläche. Die beschriebenen Flächen dienen zur gegenseitige Anlage zur Ventilbetätigung be im Kuppelvorgang.

Eine Mehrfachkupplung der beschriebenen Art ist durch die EP 0 522 493 B2 bekannt. Bei dieser Ausführung sollen die Stecker- und Muffenventile so ausgebildet und in den zugehörigen Kupplungsträgern (Tragplatten) gehaltert sein, dass in der Kupplungslage die Tragplatten dicht aneinander liegen, wodurch in der Kupplungslage jegliche Querbeanspruchungen von den Kupplungsteilen ferngehalten werden sollen. Weiterhin weisen die als Flachdichtkupplungen ausgebildeten Kuppungsteile jeweils eine stirnseitige Ventilkörper-Kreisfläche und eine diese umgebende ventilsitzseitige Ringfläche auf, und bei der bekannten Ausführung sollen jeweils in einer Schließlage die Kreisfläche und die Ringfläche übergangslos in einer gemeinsamen Verschlussebene liegen. Zudem sollen die Muffenventile jeweils mit einem radial nach außen hervorspringenden Umfangsflansch in einer entsprechenden Umfangsnut der zugehörigen Tragplatte derart versenkt befestigt sein, dass sie mit ihren flachen Stirnseiten auch in einer gemeinsamen Ebene mit der Kupplungsfläche der Tragplatte abschließen. Durch diese Anordnung soll die Tragplatte auf der Kupplungsseite in besonders einfacher Weise von Staub und anderen Verschmutzung durch einfaches Abwischen gereinigt werden können.

Eine weitere Mehrfachkupplung ist durch die Veröffentlichung FR 2 189 261 A bekannt.

Der vorliegenden Erfindung liegt die Aufgabe zugrunde, eine Mehrfachkupplung der beschriebenen Art bei konstruktiv einfacher Ausgestaltung bezüglich ihrer Herstellbarkeit und ihrer Gebrauchseigenschaften weiter zu verbessern.

Erfindungsgemäß wird dies durch die Merkmale des Anspruchs 1 erreicht. Vorteilhafte Ausgestaltungen sowie besondere Ausführungsformen, sind Gegenstand der weiteren Ansprüche. Zudem wird Schutz auch für jede Kupplungshälfte allein mit den zugehörigen spezifischen Merkmalen, d. h. unabhängig von der jeweils anderen Kupplungshälfte, beansprucht.

Die Erfindung besteht somit darin, dass bei jedem Muffenventil die Ventilkörper-Kreisfläche zumindest annähernd in einer gemeinsamen Ebene mit der Kupplungsfläche des Kupplungsträgers liegt, während aber die Ventilsitz-Ringfläche mit einem Überstand über die Kupplungsfläche und damit auch über die Kreisfläche vorsteht. Weiterhin steht bevorzugt auch bei jedem Steckerventil die Ventilkörper-Kreisfläche mit einem Überstand über die Ventilsitz-Ringfläche vor. Die genannten Überstände sind bevorzugt im Wesentlichen gleich groß. Diesem Erfindungsgedanken liegt die Erkenntnis zugrunde, dass bei dem eingangs erläuterten Stand der Technik, wobei muffenseitig alle Flächen übergangslos in einer gemeinsamen Ebene liegen sollen, ein Abwischen dieser Fläche sogar nachteilig ist, weil dadurch Schmutz gerade in die unvermeidbaren Ringspalte im stirnseitigen Muffenbereich hineingewischt werden kann. Im Gegensatz dazu bilden die muffenseitig vorstehenden Ringflächen eine Art "Schutzwall", der einen inneren Ringspalt vor Verschmutzung schützt. Außerdem wird durch die beschriebenen Überstände vorteilhafterweise auch eine Zentrierung und Positionierung der Kupplungsteile relativ zueinander beim Kuppelvorgang erreicht, indem die vorstehenden Ventilkörper-Kreisflächen der Steckerventile in die vorstehenden Ventilsitz-Ringflächen der Muffenventile eingreifen. Dennoch handelt es sich grundsätzlich um Flachdichtkupplungen, weil die Kupplungsteile beim Kuppeln mit ihren stirnseitigen Kreis- und Ringflächen jeweils flach aneinander liegen, wodurch Hohlräume vermieden werden, die sich beim Entkuppeln mit Hydraulikmedium füllen könnten, welches dann nach außen austreten würde. Somit wird eine weitgehende Leckagefreiheit erreicht.

In einer weiteren Ausgestaltung weist jedes Steckerventil in einem an den Kupplungsträger angrenzenden Fußbereich des Steckschaftes einen radialen, umlaufenden Ringansatz auf, der derart mit einem Überstand über die Kupplungsfläche des Kupplungsträgers vorsteht, dass in der Kupplungslage die Steckerteile mit ihren Ringansätzen zur abstützenden Anlage an der Kupplungsfläche des anderen, die Muffenteile aufweisenden Kupplungsträgers gelangen und dadurch die Kupplungsflächen der beiden Kupplungsträger in der Kupplungslage über einen Spalt voneinander beabstandet sind. Demnach stützen sich die beiden Kupplungsträger in der verbundenen und verriegelten Kupplungslage nicht direkt, sondern mittelbar über die Ringansätze der Steckerventile aneinander ab. Hierbei wirken die Ringansätze vorteilhafterweise auch als metallische Dichtungen gegen ein Eindringen von Schmutz in den Kupplungsbereich.

In einer weiteren Ausgestaltung ist die Mehrfachkupplung zusätzlich zu den Hydraulik-Steckkupplungen mit einer Druckluft-Reinigungseinrichtung derart ausgestattet, dass während des Kuppelvorgangs über mindestens einen Druckluftanschluss zugeführte Druckluft selbsttätig so in Richtung über die Kupplungsflächen geleitet wird, dass die Kupplungsflächen im Bereich der Kupplungsteile, und zwar insbesondere die Kupplungsfläche mit den Muffenventilen, von eventuellen Verunreinigungen freiblasbar sind. In vorteilhafter Ausgestaltung weist dazu jede von mindestens zwei Führungsbohrungen des die Muffenventile tragenden Kupplungsträgers auf der der Kupplungsfläche gegenüberliegenden Seite einen Druckluftanschluss auf. Der andere, die Steckerventile tragende Kupplungsträger weist eine entsprechende Anzahl (mindestens zwei) von Führungsbolzen zum führenden und positionierenden Eingriff in die Führungsöffnungen auf. Zweckmäßig sind die Führungsbolzen als Luftleitungsstecker ausgebildet und weisen jeweils einen axialen, stirnendseitig offenen Kanal mit mindestens einer parallel zur Kupplungsfläche in Richtung zu den Kupplungsteilen ausgerichteten Queröffnung auf. Durch diese erfindungsgemäße Ausgestaltung wird beim Kuppelvorgang automatisch Druckluft so geführt und über die Kupplungsflächen geblasen, dass Verunreinigungen aus dem Stirnbereich der zu kuppelnden Kupplungsteile entfernt werden. Dies ist im Vergleich zu einem Abwischen mittels eines Lappens einfacher sowie auch sehr viel effektiver, weil ein Eindringen von Schmutz in Spaltbereiche praktisch ausgeschlossen ist.

Weitere besondere Ausführungen und Vorteile werden in der nachfolgenden Beschreibung noch erläutert werden, und zwar anhand eines in der Zeichnung veranschaulichten, bevorzugten Ausführungsbeispiels der Erfindung. Es zeigen:
- Fig. 1: eine Perspektivansicht einer ersten Kupplungshälfte, und zwar bevorzugt in Form eines geberseitigen, Hydraulik-Muffenventile aufweisenden Festteils zum Befestigen auf der Seite eines Druckgebers (Hydraulikpumpe),
- Fig. 2: eine Ausschnittvergrößerung des Bereichs II in Fig. 1,
- Fig. 3: eine Perspektivansicht einer zweiten Kupplungshälfte, und zwar bevorzugt eines nehmerseitigen, Hydraulik-Steckerventile aufweisenden Losteils zur Verbindung mit Leitungen eines Anbaugerätes,
- Fig. 4: eine Ausschnittvergrößerung des Bereichs IV in Fig. 3,
- Fig. 5: eine Seitenansicht im Bereich eines der Steckerventile in Pfeilrichtung V gemäß Fig. 4,
- Fig.6: eine Perspektivansicht ähnlich Fig. 1 und 3, allerdings beider Kupplungshälften in einer Zwischenstellung beim Kuppeln bzw. Entkuppeln,
- Fig. 7: eine Seitenansicht in Pfeilrichtung VII gemäß Fig. 6,
- Fig. 8: eine Ausschnittvergrößerung des Bereichs VIII in Fig. 6,
- Fig.9: eine vereinfachte Seitenansicht (ohne mechanische Betätigungseinrichtung) in einer Kuppel-Zwischenstellung,
- Fig. 10: einen vergrößerten Teil-Querschnitt in der Ebene X-X gemäß Fig. 9,
- Fig. 11: eine Ansicht wie in Fig. 9 in einer weiter gekuppelten Zwischenstellung,
- Fig. 12: einen vergrößerten Querschnitt in der Ebene XII-XII gemäß Fig. 11,
- Fig. 13: eine weitere Ansicht wie in Fig. 9 und 11 in der ganz gesteckten Kupplungslage,
- Fig. 14: einen vergrößerten Schnitt in der Ebene XIV - XIV in Fig. 13,
- Fig. 15 a-c: Querschnitte entsprechend den Ebenen XV - XV in Fig. 2 und 4 in verschiedenen Kuppelstellungen der Kupplungshälften zur Erläuterung einer erfindungsgemäßen Druckluft-Reinigungseinrichtung,

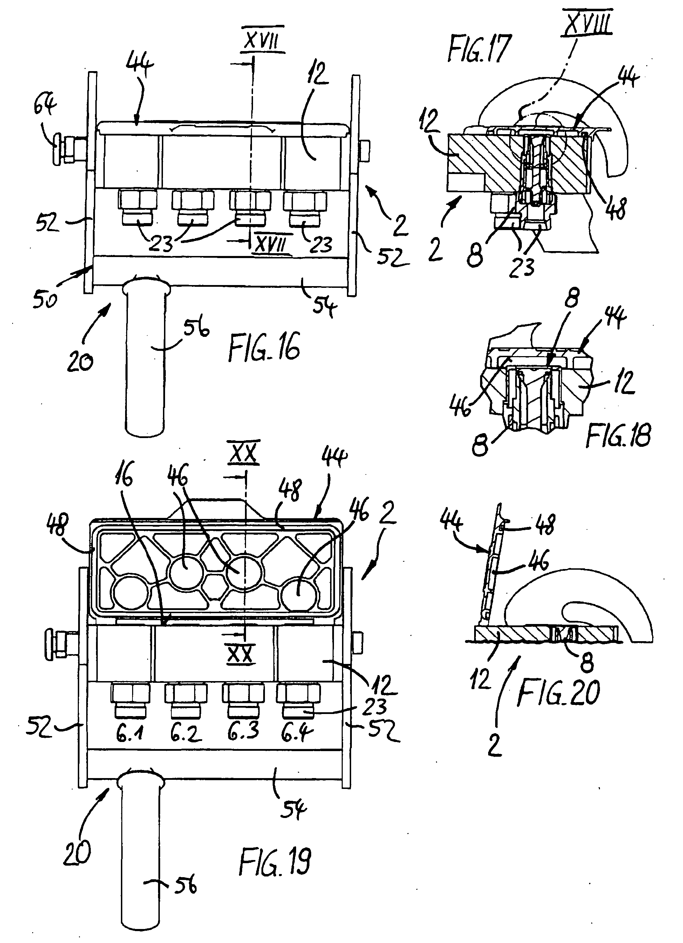

- Fig. 16: eine weitere Seitenansicht der Festteil-Kupplungshälfte mit einem geschlossenen Schutzdeckel,
- Fig. 17: einen Schnitt in der Ebene XVII - XVII gemäß Fig. 16,
- Fig. 18: eine Ausschnittvergrößerung des Bereichs XVIII in Fig. 17,
- Fig. 19: eine Ansicht wie in Fig. 16, jedoch mit geöffnetem Schutzdeckel und
- Fig. 20: einen Querschnitt in der Ebene XX - XX in Fig. 19.

In den verschiedenen Figuren der Zeichnung sind gleiche Teile stets mit den gleichen Bezugszeichen versehen. Jede eventuell nur einmal unter Bezugnahme auf nur eine oder einen Teil der Zeichnungsfiguren vorkommende Beschreibung eines Teils gilt daher analog auch bezüglich der anderen Zeichnungsfiguren, in denen dieses Teil mit dem entsprechenden Bezugzeichen ebenfalls zu erkennen ist.

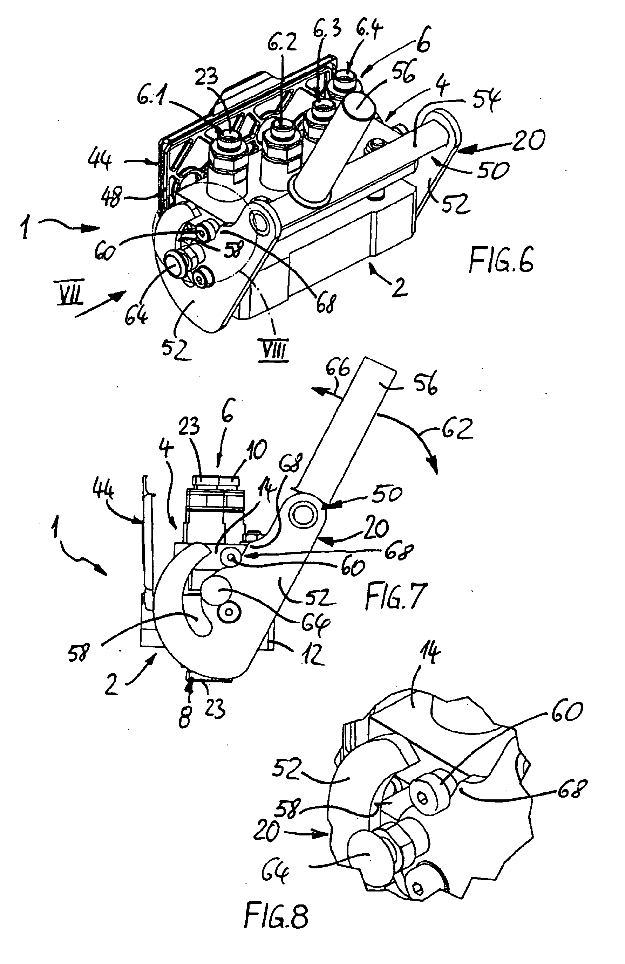

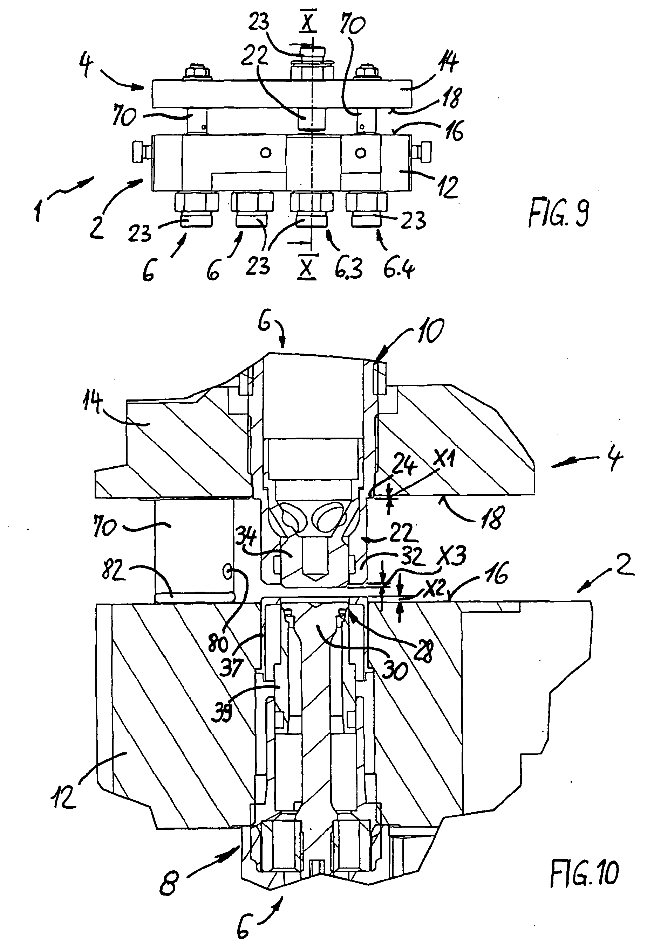

Eine Mehrfachkupplung 1 - siehe insbesondere Fig. 6 - besteht aus zwei Kupplungshälften 2 und 4. Bevorzugt ist die erste Kupplungshälfte 2 als geberseitiges Festteil zur Befestigung an einem Arbeitsfahrzeug ausgebildet, während die zweite Kupplungshälfte 4 ein nehmerseitiges Losteil eines nicht dargestellten Anbaugerätes bildet. Die Mehrfachkupplung 1 weist mindestens zwei (im dargestellten Beispiel vier) Hydraulik-Steckkupplungen 6 (6.1 bis 6.4; vgl. Fig. 6 und 9) auf. Zusätzlich können bei Bedarf auch elektrische Steckverbindungen vorgesehen sein (nicht dargestellt).

Jede Steckkupplung 6 besteht aus einem geberseitigen Kupplungsteil insbesondere in Form eines Muffenventils 8 und einem nehmerseitigen Kupplungsteil insbesondere in Form eines Steckerventils 10. Grundsätzlich wäre aber auch eine umgekehrte Anordnung der Muffen- und Steckerventile 8, 10 möglich.

Die Muffenventile 8 sind in Bohrungen eines ersten plattenförmigen Kupplungsträgers 12 und die Steckerventile 10 in Bohrungen eines zweiten plattenförmigen Kupplungsträgers 14 angeordnet. Die Kupplungsträger 12, 14 sind zum paarweisen Steckkuppeln der Kupplungsteile 8, 10 mit einander zugewandten Kupplungsflächen 16, 18 mittels einer mechanischen Betätigungseinrichtung 20, die im Folgenden noch genauer beschrieben wird, gegeneinander bewegbar und in einer Kupplungslage arretierbar. Jedes Steckerventil 10 weist einen über die Kupplungsfläche 18 des zugehörigen Kupplungsträgers 14 vorstehenden Steckschaft 22 zum Einstecken in das im Wesentlichen stirnseitig in der Kupplungsfläche 16 des zugehörigen anderen Kupplungsträgers 12 liegende Muffenventil 8 auf. Alle Kupplungsteile 8,10 weisen rückseitig Anschlüsse 23 für nicht dargestellte Hydraulik-Schlauchleitungen auf.

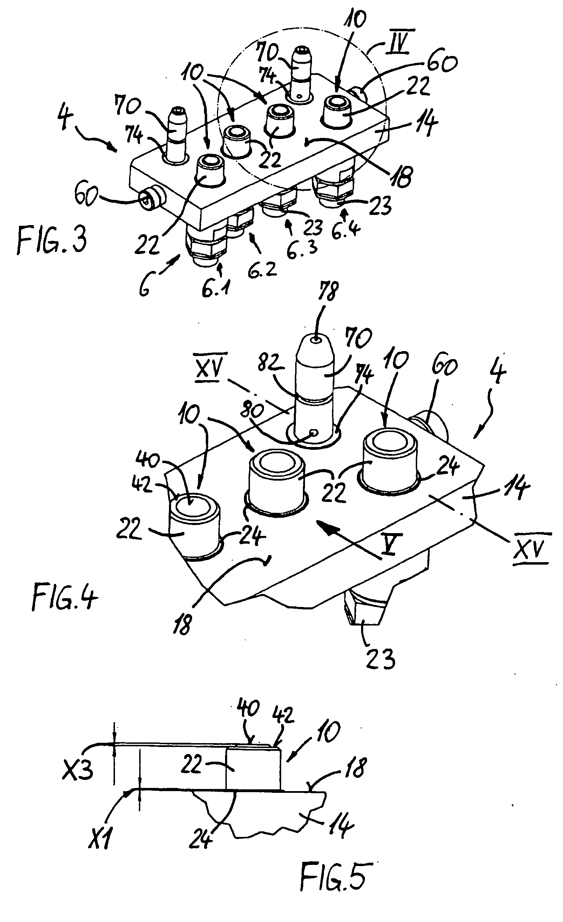

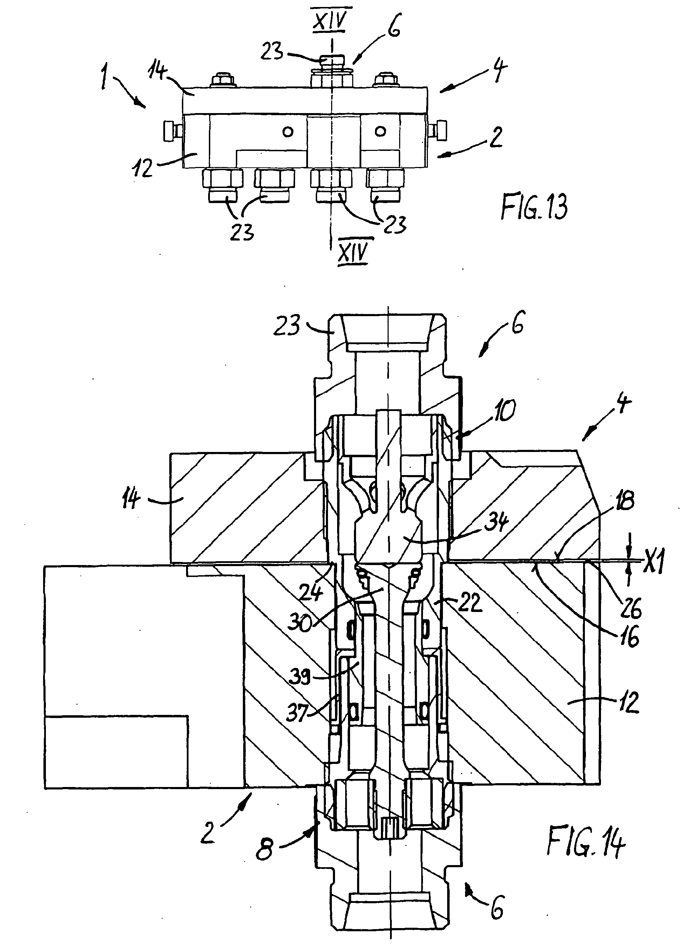

Erfindungsgemäß weist jedes Steckerventil 10 in einem an den Kupplungsträger 14 angrenzenden Fußbereich des Steckschaftes 22 einen radialen, umlaufenden Ringansatz 24 auf, der gemäß Fig. 5 derart mit einem Überstand X1 über die Kupplungsfläche 18 des Kupplungsträgers 14 vorsteht, dass in der Kupplungslage die Steckerventile 10 mit ihren Ringansätzen 24 zur abstützenden Anlage an der Kupplungsfläche 16 des anderen, die Muffenventile 8 aufweisenden Kupplungsträgers 12 gelangen. Dadurch sind in der Kupplungslage - siehe insbesondere Fig. 14 - die Kupplungsflächen 16, 18 der beiden Kupplungsträger 12, 14 über einen Spalt 26 voneinander beabstandet, der durch den Überstand X1 bestimmt ist. Vorzugsweise liegt der Überstand X1 der Ringansätze 24 über die Kupplungsfläche 18 in der Größenordnung von etwa 0,5 mm, was entsprechend auch für die Weite des Spaltes 26 zwischen den Kupplungsflächen 16, 18 in der Kupplungslage gilt.

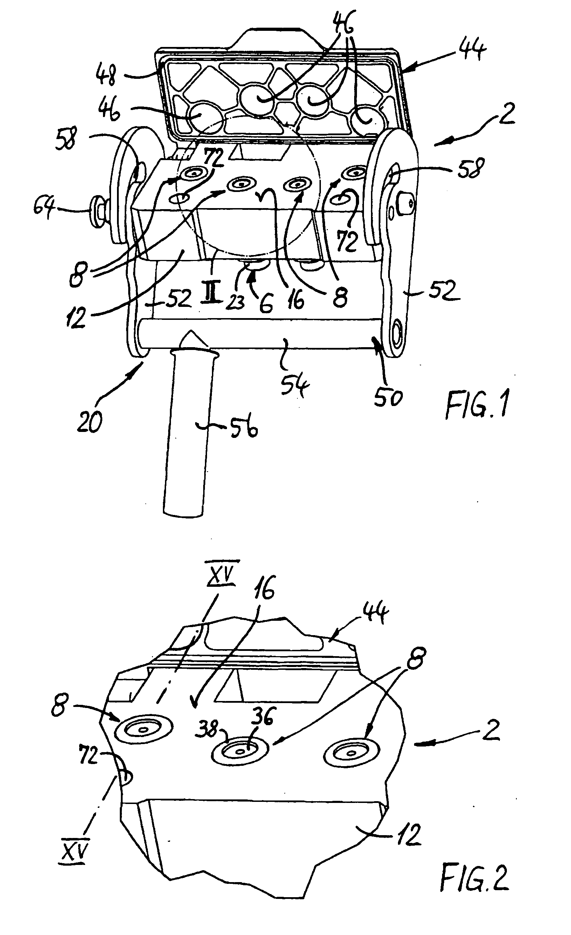

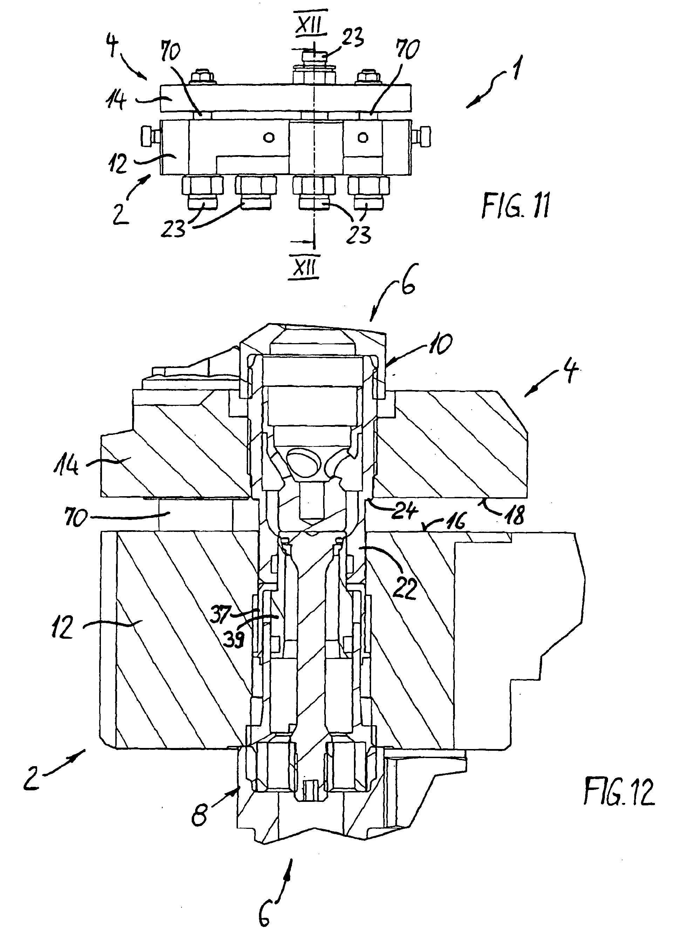

Wie sich insbesondere aus Fig. 10 ergibt, weist jedes Muffenventil 8 einen beim Kuppeln verschiebbaren Ventilsitz 28 und einen starren, unbeweglichen Ventilkörper 30 auf. Jedes Steckerventil 10 weist dem gegenüber einen starren Ventilsitz 32 und einen verschiebbaren Ventilkörper 34 auf. Bei den Muffenventilen 8 - siehe hierzu insbesondere Fig. 2 - ist dem starren Ventilkörper 30 eine vordere, stirnseitige Kreisfläche 36 zugeordnet, und dem beweglichen Ventilsitz 28 ist eine vordere, stirnseitige, die zugehörige Kreisfläche 36 konzentrisch umschließende Ringfläche 38 zugeordnet. Diese Ringfläche 38 wird unmittelbar von der angrenzenden Kupplungsfläche 16 des ersten Kupplungsträgers 12 umgeben. Dies bedeutet, dass jedes Muffenteil 8 - in Abweichung von dem eingangs erläuterten Stand der Technik gemäß EP 0 522 493 B2 - kein eigenes Gehäuse mit einem versenkt in dem Kupplungsträger 12 sitzenden Umfangsflansch aufweist. Vielmehr bildet der Kupplungsträger 12 praktisch ein Gehäuse für die Muffenventile 8, indem deren inneren Funktionsteile jeweils direkt in Bohrungen des Kupplungsträgers 12 sitzen. Jedem Ventilsitz 28 ist eine verschiebbare Hülse 37 zugeordnet, die die besagte Ringfläche 38 aufweist und beim Kuppeln von dem Steckerventil 10 verschoben wird, bis sie das eigentliche Ventilsitzelement 39 zum Öffnen des Ventils mitnimmt. Hierzu wird auf die Figuren 10, 12 und 14 verwiesen.

Bei den Steckerventilen 10 - siehe insbesondere Fig. 4 - weist der bewegliche Ventilkörper 34 eine entsprechende vordere, stirnseitige Kreisfläche 40 auf, während dem starren Ventilsitz 32 eine vordere, stirnseitige, die zugehörige Kreisfläche 40 konzentrisch umschließende Ringfläche 42 zugeordnet ist. Über die genannten Kreisflächen 36, 40 und Ringflächen 38, 42 gelangen die Kupplungsteile beim Kuppeln zur gegenseitigen Anlage zwecks Öffnungsbetätigung der Ventile bei der Kuppelbewegung (Fig. 10, 12, 14).

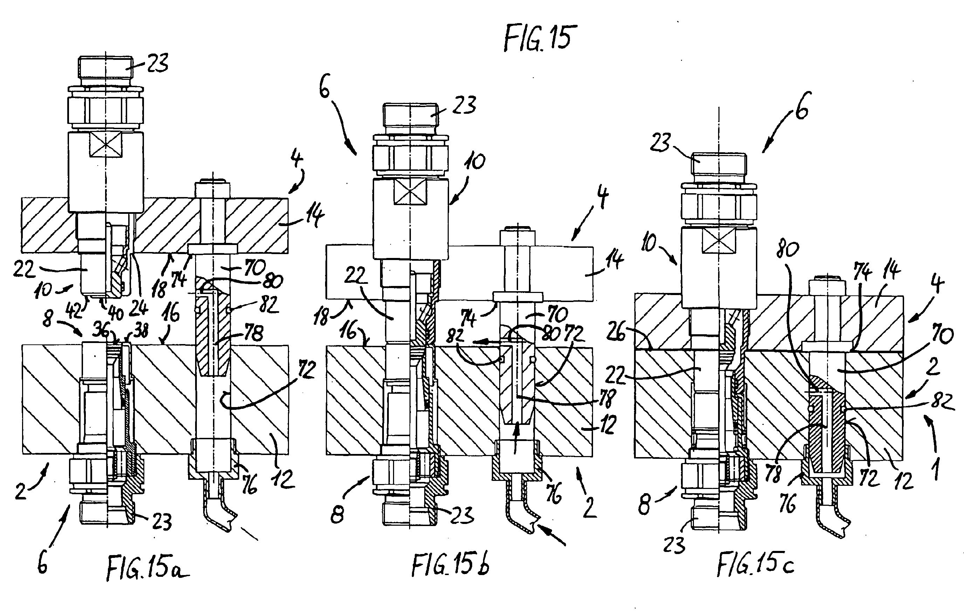

Wie sich nun am Besten aus den Fig. 10 und 15a ergibt, liegt bei jedem Muffenventil 8 die Ventilkörper-Kreisfläche 36 vorzugsweise zumindest annähernd in einer gemeinsamen Ebene mit der Kupplungsfläche 16 des Kupplungsträgers 12, während die Ventilsitz-Ringfläche 38 mit einem Überstand X2 über die Kupplungsfläche 16 und damit auch über die Kreisfläche 36 vorsteht. Dem gegenüber steht bei jedem Steckerventil 10 die Ventilkörper-Kreisfläche 40 mit einem Überstand X3 über die Ventilsitz-Ringfläche 42 vor. Die genannten Überstände X2 und X3, die nur in Fig. 10 eingezeichnet sind, sind vorzugsweise etwa gleich groß und liegen insbesondere jeweils in der Größenordnung von etwa 1 mm.

Die Wirkungen und Vorteile dieser Ausgestaltung wurden eingangs bereits eingehend erläutert. Die Zentrierwirkung durch die vorstehenden und in die Ringflächen 38 der Muffenventile 8 eingreifenden Stecker-Kreisflächen ergibt sich insbesondere aus Fig. 15b.

In vorteilhafter Ausgestaltung ist der die Muffenteile 8 aufweisende Kupplungsträger 12 des Festteils mit einem Schutzdeckel 44 ausgestattet. Hierzu wird auf die Figuren 1, 6 und insbesondere 16 bis 20 verwiesen. Der Schutzdeckel 20 ist als einseitig schwenkbar gelagerter Klappdeckel ausgebildet, der in der entkuppelten Lage selbsttätig durch Federkraft schließt und die Kupplungsfläche 16 mit den Stirnseiten der Muffenventile 8 überdeckt. Hierbei weist der Schutzdeckel 44 eine innere Dichtkontur mit Vertiefungen 46 zum Übergreifen der über die Kupplungsfläche 16 vorstehenden Ventilsitz-Ringflächen 38 der Muffenventile 8 auf. Außerdem weist der Schutzdeckel 44 eine randliche, umlaufende Dichtung 48 zur dichtenden Auflage auf dem Randbereich der Kupplungsfläche 16 auf.

Die schon kurz erwähnte Betätigungseinrichtung 20 ist bei dem dargestellten, bevorzugten Ausführungsbeispiel als Hebelverriegelung mit einem an dem Kupplungsträger 12 des Festteils bzw. der ersten Kupplungshälfte 2 schwenkbar gelagerten Hebelelement 50 ausgebildet. Dieses Hebelelement 50 besteht aus zwei seitlichen Hebelschenkeln 52, die jeweils beidseitig des ersten Kupplungsträgers 12 an diesem schwenkbar gelagert und in ihren freien Endbereichen über eine Querstange 54 verbunden sind. An der Querstange 54 ist ein Handgriff 56 befestigt. Die beiden Hebelschenkel 52 bestehen bevorzugt aus Flachmetall und weisen jeweils einen kurvenförmigen Riegelschlitz 58 zur Aufnahme von seitlichen Riegelelementen 60 des anderen Kupplungsträgers 14 der Kupplungshälfte 4 derart auf, dass durch Verschwenken des Hebelelementes 50 aus einer Lösestellung (vgl. Fig. 6 und 7) in Pfeilrichtung 62 in eine Riegelstellung über die sich relativ in den Riegelschlitzen 58 bewegenden Riegelelemente 60 die Kupplungsträger 12 und 14 zusammengeführt werden. Dazu weisen die Riegelschlitze 58 einen entsprechenden Krümmungsverlauf auf. In der ganz gekuppelten Kupplungslage wird das Hebelelement 50 über eine Verriegelung arretiert, wobei diese Verriegelung über einen Löseknopf 64 entriegelbar ist. Gemäß einer besonderen Ausgestaltung ist das Hebelelement 50 bzgl. seiner Bewegung in Löserichtung (Pfeilrichtung 66 in Fig. 7) über einen Endanschlag 68 definiert in einer ein Trennen der Kupplungsträger, d. h. ein Abheben des Losteil-Kupplungsträgers 14, ermöglichenden Lösestellung begrenzt. Gemäß Fig. 6 bis 8 kann der Endanschlag 68 mit Vorteil durch mindestens einen an die offene Seite des zugehörigen Riegelschlitzes 58 wenigstens eines der Hebelschenkel 52 angrenzenden Anschlagansatz 68 gebildet sein, der in der beschriebenen Lösestellung zur Anlage an dem Riegelelement 60 gelangt. Vorzugsweise ist jeder der beiden Hebelschenkel 52 mit einem entsprechenden Anschlagansatz 68 ausgebildet, die dann an beiden Riegelelementen 60 zur bewegungsbegrenzenden Anlage gelangen, siehe Fig. 7 und 8. Durch diese vorteilhafte Ausgestaltung ist beim Lösen jedenfalls gewährleistet, dass das Hebelelement 50 eine Stellung einnimmt, in der - siehe Fig. 7 - die zweite Kupplungshälfte 4 von der ersten Kupplungshälfte 2 abgenommen werden kann.

In einer weiteren vorteilhaften Ausgestaltung weist der die Steckerventile 10 halternde Kupplungsträger 14 (mindestens) zwei Führungsbolzen 70 auf, die sich senkrecht zur Kupplungsfläche 18 erstrecken. Der andere, die Muffenventile 8 aufweisende Kupplungsträger 12 weist korrespondierende Führungsbohrungen 72 zum positionierenden und führenden Eingriff der Führungsbolzen 70 auf. Hierzu wird insbesondere auf Fig. 15 verwiesen. Jeder Führungsbolzen 70 weist in seinem an den Kupplungsträger 14 bzw. dessen Kupplungsfläche 18 angrenzende Fußbereich einen radialen, umlaufenden Ringansatz 74 auf, der - analog zu den Ringansätzen 24 der Steckerventile 10 - in der Kupplungslage zur abstützenden Anlage an der Kupplungsfläche 16 des anderen Kupplungsträgers 12 gelangt. Die Ringansätze 54 stehen somit mit einem entsprechenden Überstand X1 über die Kupplungsfläche 18 vor.

Die erfindungsgemäße Mehrfachkupplung 1 ist weiterhin mit einer zusätzlichen Druckluft-Reinigungseinrichtung derart ausgestattet, dass während des Kuppelvorgangs über mindestens einen Druckluftanschluss 76 zugeführte Druckluft selbsttätig so in Richtung über die Kupplungsflächen 16, 18 geleitet wird, dass insbesondere die Kupplungsfläche 16 im Bereich der Muffenventile 8 von eventuellen Verunreinigungen freigeblasen wird. In der bevorzugten Ausführungsform - siehe hierzu insbesondere Fig. 15 - weist jede Führungsbohrung 72 auf ihrer der Kupplungsfläche 16 gegenüberliegenden Seite einen Druckluftanschluss 76 auf. Die Führungsbolzen 70 sind als Luftleitungsstecker ausgebildet und weisen dazu jeweils einen axialen, stirnendseitig offenen Kanal 78 mit einer parallel zu den Kupplungsflächen 16, 18 in Richtung zu den Kupplungsteilen 8, 10 ausgerichteten Queröffnung 80 auf. Ferner weist jeder Führungsbolzen 70 im axial zwischen der Queröffnung 80 und dem freien, offenen Ende liegenden Bereich seiner Umfangsfläche einen Dichtring 82 auf. Wie sich aus Fig. 15 b ergibt, wird durch diese Ausgestaltung beim Kuppelvorgang Druckluft in Richtung der eingezeichneten Pfeile über den jeweiligen Druckluftanschluss 76 und den Führungsbolzen 70 durch den Kanal 78 und die Queröffnung 80 über die Kupplungsfläche 16 geblasen, wodurch Verunreinigungen entfernt werden.

## Patentansprüche

1. Mehrfachkupplung (1) mit mindestens zwei Hydraulik-Steckkupplungen (6), wobei jede Steckkupplung (6) aus einem geberseitigen Kupplungsteil und einem nehmerseitigen Kupplungsteil besteht, wobei die als Muffenventil (8) und Steckerventil (10) ausgebildeten, zum Kuppeln gegenseitig dichtend ineinandersteckbaren Kupplungsteile in einem entkuppelten Zustand selbsttätig schließen und sich beim Kuppeln gegenseitig öffnen, wobei die geberseitigen Kupplungsteile (8) in einem ersten Kupplungsträger (12) und die nehmerseitigen Kupplungsteile (10) entsprechend gegenüberliegend in einem zweiten Kupplungsträger (14) gehaltert sind, wobei die Kupplungsträger (12, 14) zum paarweisen Steck-Kuppeln der Kupplungsteile (8, 10) mit einander zugewandten Kupplungsflächen (16, 18) mittels einer Betätigungseinrichtung (20) gegeneinander bewegbar und in einer Kupplungslage arretierbar sind, wobei jedes Steckerventil (10) einen über die Kupplungsfläche (18) des zugehörigen Kupplungsträgers (14) vorstehenden Steckschaft (22) zum Einstecken in das im Wesentlichen stirnseitig in der Kupplungsfläche (16) des zugehörigen Kupplungsträgers (12) liegende Muffenventil (8) aufweist, und wobei jedes Muffenventil (8) einen beim Kuppeln verschiebbaren Ventilsitz (28) und einen starren Ventilkörper (30) sowie jedes Steckerventil (10) einen starren Ventilsitz (32) und einen verschiebbaren Ventilkörper (34) aufweisen, wobei jedem Ventilkörper (30, 34) eine vordere, stirnseitige Kreisfläche (36, 40) und jedem Ventilsitz (28, 32) eine vordere, stirnseitige, die jeweils zugehörige Kreisfläche (36, 40) konzentrisch umschließende Ringfläche (38, 42) zugeordnet sind, **dadurch gekennzeichnet, dass** bei jedem Muffenventil (8) die Ventilsitz-Ringfläche (38) mit einem Überstand (X2) über die Kupplungsfläche (16) vorsteht, während die Ventilkörper-Kreisfläche (36) zumindest annähernd in einer gemeinsamen Ebene mit der Kupplungsfläche (16) des Kupplungsträgers (12) liegt.

2. Mehrfachkupplung nach Anspruch 1,
**dadurch gekennzeichnet, dass** bei jedem Steckerventil (10) die Ventilkörper-Kreisfläche (40) mit einem Überstand (X3) über die Ventilsitz-Ringfläche (42) vorsteht.

3. Mehrfachkupplung nach Anspruch 1 und 2,
**dadurch gekennzeichnet, dass** die Überstände (X2, X3) etwa gleich groß sind und insbesondere jeweils etwa in der Größenordnung von 1mm liegen.

4. Mehrfachkupplung nach einem der Ansprüche 1 bis 3,
**dadurch gekennzeichnet, dass** jedes Steckerventil (10) in einem an den Kupplungsträger (14) angrenzerden Fußbereich des Steckschaftes (22) einen radialen umlaufenden Ringansatz (24) aufweist, der derart mit einem Überstand (X1) über die Kupplungsfläche (18) des Kupplungsträgers (14) vorsteht, dass in der Kupplungslage die Steckerventile (10) mit ihren Ringansätzen (24) zur abstützende Anlage an der Kupplungsfläche (16) des anderen, die Muffenventile (8) aufweisenden Kupplungsträgers (12) gelangen.

5. Mehrfachkupplung nach Anspruch 4,
**dadurch gekennzeichnet, dass** der Überstand (X1) der Ringansätze (24) über die Kupplungsfläche (18) - und **dadurch** auch ein Spalt (26) zwischen den Kupplungsflächen (16, 18) der gekuppelten Kupplungsträger (12, 14) - etwa in der Größenordnung von etwa 0,5 mm liegt.

6. Mehrfachkupplung nach einem der Ansprüche 1 bis 5,
**dadurch gekennzeichnet, dass** der die Muffenventile (8) aufweisende Kupplungsträger (12) einen Schutzdeckel (44) aufweist, der einseitig schwenkbar gelagert ist und in der entkuppelten Lage selbsttätig schließt und die Kupplungsfläche (16) mit den Stirnseiten der Muffenventile (8) überdeckt.

7. Mehrfachkupplung nach Anspruch 6,
**dadurch gekennzeichnet, dass** der Schutzdeckel (44) eine innere Dichtkontur mit Vertiefungen (46) zum Übergreifen der über die Kupplungsfläche (16) vorstehenden Ventilsitz-Ringflächen (38) der Muffenventile (8) aufweist.

8. Mehrfachkupplung nach Anspruch 6 oder 7,
**dadurch gekennzeichnet, dass** der Schutzdeckel (44) eine randliche, umlaufende Dichtung (48) zur dichtenden Auflage auf der Kupplungsfläche (16) aufweist.

9. Mehrfachkupplung nach einem der Ansprüche 1 bis 8,
**dadurch gekennzeichnet, dass** die Betätigungseinrichtung (20) als mechanische Hebelverrieglung mit einem an dem einen Kupplungsträger (12) schwenkbar gelagerten Hebelelement (50) ausgebildet ist, wobei das Hebelelement (50) zwei seitliche Hebelschenkel (52) mit kurvenförmigen Riegelschlitzen (58) zur Aufnahme von seitlichen Riegelelementen (60) des anderen Kupplungsträgers (14) derart aufweist, dass durch Verschwenken des Hebelelementes (50) aus einer Lösestellung in eine Riegelstellung über die sich relativ in den Riegelschlitzen (58) bewegenden Riegelelemente (60) die Kupplungsträger (12, 14) zusammengeführt werden.

10. Mehrfachkupplung nach Anspruch 9,
**dadurch gekennzeichnet, dass** das Hebelelement (50) bezüglich seiner Bewegung in Löserichtung (66) über einen Endanschlag (68) definiert in einer ein Trennen der Kupplungsträger (12, 14) ermöglichenden Lösestellung begrenzt ist.

11. Mehrfachkupplung nach Anspruch 10,
**dadurch gekennzeichnet, dass** der Endanschlag (64) durch mindestens einen an die offene Seite des zugehörigen Riegelschlitzes (58) des Hebelschenkels (52) angrenzenden Anschlagansatz (68) gebildet ist, der in der Lösestellung zur Anlage an dem Riegelelement (60) gelangt.

12. Mehrfachkupplung nach einem der Ansprüche 1 bis 11,
**dadurch gekennzeichnet, dass** einerderKupplungsträger(12, 14), insbesondere der die Steckventile (10) halternde Kupplungsträger (14), mindestens zwei Führungsbolzen (70) und der andere Kupplungsträger, insbesondere der die Muffenventile (8) halternde Kupplungsträger (12), korrespondierende Führungsbohrungen (72) zum positionierenden und führenden Eingriff der Führungsbolzen (70) aufweisen.

13. Mehrfachkupplung nach Anspruch 12,
**dadurch gekennzeichnet, dass** jederFührungsbolzen(70)in seinem an den Kupplungsträger (14) angrenzenden Fußbereich einen radialen, umlaufenden Ringansatz (74) aufweist, der - analog zu den Ringansätzen (24) der Steckerventile (10) - in der Kupplungslage zur abstützenden Anlage an der Kupplungsfläche (16) des anderen Kupplungsträgers (12) gelangt.

14. Mehrfachkupplung nach einem der Ansprüche 1 bis 13,
**gekennzeichnet durch** eine Druckluft-Reinigungseinrichtung derart, dass während des Kuppelvorgangs über mindestens einen Druckluftanschluss (76) zugeführte Druckluft so in Richtung über die Kupplungsflächen (16, 18) geleitet wird, dass die Kupplungsflächen (16, 18) im Bereich der Kupplungsteile (8, 10) von eventuellen Verunreinigungen freiblasbar sind.

15. Mehrfachkupplung nach Anspruch 14,
**dadurch gekennzeichnet, dass** bevorzugt jede Führungsbohrung (72) auf ihrer der Kupplungsfläche (16) gegenüberliegenden Seite einen Druckluftanschluss (76) aufweist, wobei die Führungsbolzen (70) als Luftleitungsstecker ausgebildet sind und jeweils einen axialen, stimendseitig offenen Kanal (78) mit einer parallel zur Kupplungsfläche (16/18) in Richtung zu den Kupplungsteilen (8, 10) ausgerichteten Queröffnung (80) aufweist.

16. Mehrfachkupplung nach Anspruch 15,
**dadurch gekennzeichnet, dass** jeder Führungsbolzen (70) im axial zwischen der Queröffnung (80) und dem freien, offenen Ende liegenden Bereich seiner Umfangsfläche einen Dichtring (82) aufweist.

17. Kupplungshälfte (4) für eine Mehrfachkupplung (1) nach einem der Ansprüche 1 bis 16, bestehend aus einem Kupplungsträger (14) mit mindestens zwei als Steckerventile (10) ausgebildeten Hydraulik-Kupplungsteilen,
**gekennzeichnet durch** eine Ausgestaltung entsprechend mindestens einem der die Seite der Steckerventile (10) betreffenden Merkmale mindestens eines der Ansprüche 1 bis 16.

18. Kupplungshälfte (2) für eine Mehrfachkupplung (1) nach einem der Ansprüche 1 bis 16, bestehend aus einem Kupplungsträger (12) mit mindestens zwei als Muffenventile (8) ausgebildeten Hydraulik-Kupplungsteilen,
**gekennzeichnet durch** eine Ausgestaltung entsprechend mindestens einem der die Seite der Muffenventile (8) betreffenden Merkmale mindestens eines der Ansprüche 1 bis 16.

## Claims

1. A multiple coupling (1) with at least two hydraulic plug-in couplings (6), wherein each plug-in coupling (6) comprises a dispenser-side coupling part and a consumer-side coupling part, wherein the coupling parts designed in the form of a sleeve valve (8) and a plug valve (10) and capable of being inserted one into the other in a mutually sealed manner for coupling purposes close automatically in an uncoupled state and open in a reciprocal manner during the coupling, wherein the dispenser-side coupling parts (8) are held in a first coupling support (12) and the consumer-side coupling parts (10) are held in a corresponding opposed manner in a second coupling support (14), wherein the coupling supports (12, 14) are movable towards each other and are capable of being locked in a coupling position by means of an actuation device (20) for the pair-wise plug-in coupling of the coupling parts (8, 10) with mutually facing coupling faces (16, 18), wherein each plug valve (10) has a plug-in shank (22) projecting beyond the coupling face (18) of the associated coupling support (14) for insertion into the sleeve valve (8) situated essentially at the end in the coupling face (16) of the associated coupling support (12), and wherein each sleeve valve (8) has a valve seat (28) displaceable during the coupling and a rigid valve member (30) and each plug valve (10) has a rigid valve seat (32) and a displaceable valve member (34), wherein each valve member (30, 34) has associated with it a front circular face (36, 40) at the end and each valve seat (28, 32) has associated with it a front annular face (38, 42) - surrounding the respective associated circular face (36, 40) in a concentric manner - at the end, **characterized in that** in the case of each sleeve valve (8) the annular valve-seat face (38) projects by a distance (**X2**) beyond the coupling face (16), whereas the circular valve-seat face (36) is situated at least approximately in a common plane with the coupling face (16) of the coupling support (12).

2. A multiple coupling according to Claim 1, **characterized in that** in the case of each plug valve (10) the circular valve-seat face (40) projects by a distance (**X3**) beyond the annular valve-seat face (42).

3. A multiple coupling according to Claims 1 and 2, **characterized in that** the distances (**X2, X3**) have substantially an equal magnitude and, in particular, are approximately in the order of magnitude of 1 mm in each case.

4. A multiple coupling according to any one of Claims 1 to 3, **characterized in that** in a base region of the plug-in shank (22) adjoining the coupling support (14) each plug valve (10) has a continuous radial annular attachment (24) which projects by a distance (**X1**) beyond the coupling face (18) of the coupling support (14) in such a way that in the coupling position the annular attachments (24) of the plug valves (10) come to abut in a supporting manner against the coupling face (16) of the other coupling support (12) comprising the sleeve valves (8).

5. A multiple coupling according to Claim 4, **characterized in that** the distance (**X1**) of the annular attachments (24) beyond the coupling face (18) - and in this way also a gap (26) between the coupling faces (16, 18) of the coupled coupling supports (12, 14) - is approximately in the order of magnitude of about 0-5 mm.

6. A multiple coupling according to any one of Claims 1 to 5, **characterized in that** the coupling support (12) comprising the sleeve valves (8) has a protective lid (44) which is mounted so as to be pivotable on one side and which in the uncoupled position closes automatically and covers the coupling face (16) with the end faces of the sleeve valves (8).

7. A multiple coupling according to Claim 6, **characterized in that** the protective lid (44) has an internal sealing contour with depressions (46) for engaging over the annular valve-seat faces (38) of the sleeve valves (8) which project over the coupling face (16).

8. A multiple coupling according to Claim 6 or 7, **characterized in that** the protective lid (44) has a continuous seal (48) on the edge for resting on the coupling face (16) in a sealed manner.

9. A multiple coupling according to any one of Claims 1 to 8, **characterized in that** the actuation device (20) is designed in the form of a mechanical lever lock with a lever element (50) mounted so as to be pivotable on one coupling support (12), wherein the lever element (50) has two lateral lever arms (52) with curved bolt slots (58) for receiving lateral bolt elements (60) of the other coupling support (14) in such a way that the coupling supports (12, 14) are brought together as a result of the lever element (50) being pivoted out of a release position into a locking position by way of the bolt elements (60) moving in a relative manner in the bolt slots (58).

10. A multiple coupling according to Claim 9, **characterized in that** the lever element (50) is limited in a defined manner with respect to its movement in the release direction (66) by way of an end stop (68) in a release position permitting a separation of the coupling supports (12, 14).

11. A multiple coupling according to Claim 10, **characterized in that** the end stop (64) is formed by at least one stop attachment (68) which is adjacent to the open side of the associated bolt slot (58) of the lever arm (52) and which in the release position comes to abut against the bolt element (60).

12. A multiple coupling according to any one of Claims 1 to 11, **characterized in that** one of the coupling supports (12, 14), in particular the coupling support (14) holding the plug valves (10), has at least two guiding pins (70) and the other coupling support, in particular the coupling support (12) holding the sleeve valves (8), has corresponding guiding bores (72) for engaging the guiding pins (70) in a positioning and guiding manner.

13. A multiple coupling according to Claim 12, **characterized in that** in its base region adjacent to the coupling support (14) each guiding pin (70) has a continuous radial annular attachment (74) which - in a manner similar the annular attachments (24) of the plug valves (10) - arrives in the coupling position for abutting in a supporting manner against the coupling face (16) of the other coupling support (12).

14. A multiple coupling according to any one of Claims 1 to 13, **characterized by** a compressed-air cleaning device in such a way that compressed air supplied by way of at least one compressed-air attachment (76) during the coupling procedure is conveyed in such a way in the direction over the coupling faces (16, 18) that the coupling faces (16, 18) in the region of the coupling parts (8, 10) are capable of being blasted free of possible dirt.

15. A multiple coupling according to Claim 14, **characterized in that** the side of each guiding bore (72) opposite the coupling face (16) preferably has a compressed-air attachment (76), wherein the guiding pins (70) are designed in the form of air-guiding plugs and have in each case an axial duct (78) open on the end face with a transverse opening (80) directed parallel to the coupling face (16 / 18) in the direction towards the coupling parts (8, 10).

16. A multiple coupling according to Claim 15, **characterized in that** each guiding pin (70) has a sealing ring (82) in the region of its peripheral face situated axially between the transverse opening (80) and the free open end.

17. A coupling half (4) for a multiple coupling (1) according to any one of Claims 1 to 16, comprising a coupling support (14) with at least two hydraulic coupling parts designed in the form of plug valves (10), **characterized by** an arrangement corresponding to at least one of the features of at least one of Claims 1 to 16 relating to the side of the plug valves (10).

18. A coupling half (2) for a multiple coupling (1) according to any one of Claims 1 to 16, comprising a coupling support (12) with at least two hydraulic coupling parts designed in the form of sleeve valves (8), **characterized by** an arrangement corresponding to at least one of the features of at least one of Claims 1 to 16 relating to the side of the sleeve valves (8).

## Revendications

1. Connecteur multiple (1), comportant au moins deux connecteurs mâles (6) hydrauliques, chaque connecteur mâle (6) étant formé par un élément de couplage du côté distribution et un élément de couplage du côté réception, sachant que les éléments de couplage réalisés sous la forme d'une vanne femelle (8) et d'une vanne mâle (10), enfichables l'une dans l'autre de manière étanche pour le couplage, se ferment automatiquement dans une position découplée et s'ouvrent réciproquement lors du couplage, sachant que les éléments de couplage (8) du côté distribution sont maintenus dans un premier support de connecteurs (12) et les éléments de couplage (10) du côté réception sont maintenus dans un deuxième support de connecteurs (14), sachant que pour le couplage par paires des éléments de couplage (8, 10) avec des surfaces de couplage (16, 18) orientées l'une vers l'autre, lesdits supports de connecteurs (12, 14) sont aptes à être déplacés l'un vers l'autre au moyen d'un dispositif d'actionnement (20) et sont aptes à être immobilisés dans une position de couplage, chaque vanne mâle (10) comportant une tige (22), en saillie au-delà de la surface de couplage (18) du support de connecteurs (14) associé et destinée à être enfichée dans la vanne femelle (8), située sensiblement du côté frontal dans la surface de couplage (16) du support de connecteurs (12) associé, chaque vanne femelle (8) comportant un siège (28) mobile en translation pendant le couplage et un corps (30) rigide et chaque vanne mâle (10) comportant un siège (32) rigide et un corps (34) mobile en translation, une surface circulaire (36, 40) frontale avant étant associée à chaque corps de vanne (30, 34) et une surface annulaire (38, 42) frontale avant, entourant concentriquement la surface circulaire (36, 40) respectivement associée, étant associée à chaque siège de vanne (28, 32), **caractérisé en ce que** sur chaque vanne femelle (8), la surface annulaire (38) du siège de vanne s'avance avec une avancée (X2) au-delà de la surface de couplage (16), alors que la surface circulaire (36) du corps de vanne est située au moins à peu près dans un plan commun avec la surface de couplage (16) du support de connecteurs (12).

2. Connecteur multiple selon la revendication 1, **caractérisé en ce que** sur chaque vanne mâle (10), la surface circulaire (40) du corps de vanne s'avance avec une avancée (X3) au-delà de la surface annulaire (42) du siège de vanne.

3. Connecteur multiple selon les revendications 1 et 2, **caractérisé en ce que** les avancées (X2, X3) ont sensiblement la même dimension et, en particulier, sont chacune de l'ordre de grandeur de 1 mm environ.

4. Connecteur multiple selon l'une quelconque des revendications 1 à 3, **caractérisé en ce que** chaque vanne mâle (10), dans une zone inférieure de la tige (22), adjacente au support de connecteurs (14), comporte une saillie annulaire (24) radiale périphérique, qui s'avance avec une avancée (X1) au-delà de la surface de couplage (18) du support de connecteurs (14), de telle sorte que, dans la position de couplage, les vannes mâles (10) avec leurs saillies annulaires (24) viennent en contact d'appui sur la surface de couplage (16) de l'autre support de connecteurs (12) muni des vannes femelles (8).

5. Connecteur multiple selon la revendication 4, **caractérisé en ce que** l'avancée (X1) des saillies annulaires (24) au-delà des surfaces de couplage (18) - et, de ce fait, aussi une fente (26) entre les surfaces de couplage (16, 18) des supports de connecteurs (12, 14) accouplés - est à peu près de l'ordre de grandeur de 0,5 mm environ.

6. Connecteur multiple selon l'une quelconque des revendications 1 à 5, **caractérisé en ce que** le support de connecteurs (12), muni des vannes femelles (8), comporte un couvercle de protection (44), qui est monté pivotant sur un côté et se ferme automatiquement dans la position découplée et recouvre la surface de couplage (16) avec les faces frontales des vannes femelles (8).

7. Connecteur multiple selon la revendication 6, **caractérisé en ce que** le couvercle de protection (44) comporte un contour étanche intérieur avec des creux (46) pour s'engager au-dessus des surfaces annulaires (38), s'avançant au-delà de la surface de couplage (16), des sièges des vannes femelles (8).

8. Connecteur multiple selon la revendication 6 ou 7, **caractérisé en ce que** le couvercle de protection (44) comporte un joint d'étanchéité (48) périphérique formant un bord pour la pose étanche sur la surface de couplage (16).

9. Connecteur multiple selon l'une quelconque des revendications 1 à 8, **caractérisé en ce que** le dispositif d'actionnement (20) sous la forme d'un système de verrouillage mécanique à levier est réalisé avec un élément de levier (50), monté pivotant sur l'un des supports de connecteurs (12), ledit élément de levier (50) comportant deux branches (52) avec des fentes de verrouillage (58) courbes, destinées à recevoir des éléments de verrouillage (60) latéraux de l'autre support de connecteurs (14), de telle sorte que, sous l'effet du pivotement de l'élément de levier (50) hors d'une position de déblocage dans une position de verrouillage, les supports de connecteurs (12, 14) sont amenés l'un contre l'autre par les éléments de verrouillage (60) se déplaçant par rapport aux fentes de verrouillage (58).

10. Connecteur multiple selon la revendication 9, **caractérisé en ce que** l'élément de levier (50) est limité dans son mouvement dans la direction de déblocage (66) par une butée de fin de course (68) de manière définie dans une position de déblocage permettant une séparation des supports de connecteurs (12, 14).

11. Connecteur multiple selon la revendication 10, **caractérisé en ce que** la butée de fin de course (64) est formée par au moins un talon de butée (68), qui est adjacent au côté ouvert de la fente de verrouillage (58) associée de la branche (52) du levier et qui, dans la position de déblocage, parvient en appui contre l'élément de verrouillage (60).

12. Connecteur multiple selon l'une quelconque des revendications 1 à 11, **caractérisé en ce que** l'un des supports de connecteurs (12, 14), en particulier le support de connecteurs (14) maintenant les vannes mâles (10), comporte au moins deux boulons de guidage (70), et l'autre support de connecteurs, en particulier le support de connecteurs (12) maintenant les vannes femelles (8), comporte des forures de guidage (72) correspondantes pour l'engagement en position et en guidage des boulons de guidage (70).

13. Connecteur multiple selon la revendication 12, **caractérisé en ce que** chaque boulon de guidage (70), dans sa zone inférieure adjacente au support de connecteurs (14), comporte une saillie annulaire (74) radiale périphérique, qui dans la position de couplage - de manière analogue aux saillies annulaires (24) des vannes mâles (10) - vient en contact d'appui sur la surface de couplage (16) de l'autre support de connecteurs (12).

14. Connecteur multiple selon l'une quelconque des revendications 1 à 13, **caractérisé par** un dispositif de nettoyage à air comprimé, de telle sorte que, pendant le processus de couplage, l'air comprimé, acheminé par au moins un raccord pour air comprimé (76), est guidé dans la direction au-dessus des surfaces de couplage (16, 18), de telle sorte que d'éventuelles impuretés peuvent être enlevées des surfaces de couplage (16, 18) dans la zone des éléments de couplage (8, 10).

15. Connecteur multiple selon la revendication 14, **caractérisé en ce que** de préférence chaque forure de guidage (72), sur son côté face à la surface de couplage (16), comporte un raccord pour air comprimé (76), les boulons de guidage (70) étant réalisés sous la forme de fiches de guidage d'air et comportent chacun un conduit (78) axial, ouvert à l'extrémité frontale, ayant une ouverture transversale (80) orientée parallèlement à la surface de couplage (16/18) vers les éléments de couplage (8, 10).

16. Connecteur multiple selon la revendication 15, **caractérisé en ce que** chaque boulon de guidage (70) comporte une bague d'étanchéité (82) dans la zone de sa surface périphérique, laquelle est située axialement entre l'ouverture transversale (80) et l'extrémité libre ouverte.

17. Moitié de connecteur (4) pour un connecteur multiple (1) selon l'une quelconque des revendications 1 à 16, formé par un support de connecteurs (14) avec au moins deux éléments de couplage hydrauliques, réalisés sous la forme de vannes mâles (10), **caractérisée par** une configuration correspondant au moins à une des caractéristiques, concernant le côté des vannes mâles (10), d'au moins une des revendications 1 à 16.

18. Moitié de connecteur (2) pour un connecteur multiple (1) selon l'une quelconque des revendications 1 à 16, formé par un support de connecteurs (12) avec au moins deux éléments de couplage hydrauliques, réalisés sous la forme de vannes femelles (8), **caractérisée par** une configuration correspondant au moins à une des caractéristiques, concernant le côté des vannes femelles (8), d'au moins une des revendications 1 à 16.
